# EUROPEAN PATENT APPLICATION

(11) **EP 1 589 432 A2**
(43) Date of publication of application: **26.10.2005**
(21) Application number: 05007903.7
(22) Date of filing: 11.04.2005
(51) Int. Cl.: G06F 12/02, G06F 9/46

(54) **Information processor capable of using past processing space**

(30) Priority: 14.04.2004 JP 2004118969
(71) Applicant: NEC CORPORATION, Minato-ku, Tokyo 108-8001 (JP)
(72) Inventor: Sawada, Kenichi, Minato-ku Tokyo 108-8001 (JP)
(74) Representative: von Samson-Himmelstjerna, Friedrich

(57) **Abstract**

An information processor uses the past processing space to shorten the time spent for starting up programs, thereby increasing convenience for the user. A memory unit provides memory space that can be used as processing space. A control unit retains, in the memory space of the memory unit, the processing space of programs that have been executed in the past even after the programs have been shut down, and further, manages the priority of each program. When a program is to be started up, and if the processing space of that program has not been retained, and moreover, if a sufficient vacant region does not exist in the memory space, the control unit discards the processing space of the program having the lowest priority among programs that are not being executed to create a vacant region in the memory space and newly secures processing space in that vacant region. The control unit then reads the program to the processing space that has been newly secured.

## Description

### Background of the Invention:

### 1. Field of the Invention:

The present invention relates to an information processor for executing programs.

### 2. Description of the Related Art:

An information processor such as a personal computer, a portable information communication terminal, or a portable telephone provides a user with a wide variety of capabilities by executing programs of various applications. To enhance convenience for the user, various methods are used to eliminate program processes and thereby improve response.

Improving response at the time of starting up a program is also important. For example, the response of the program start-up is particularly important when equal response is required of both a program that is being newly started up by the operations by the user and a program that has already been started up, or when a program is frequently started up and shut down.

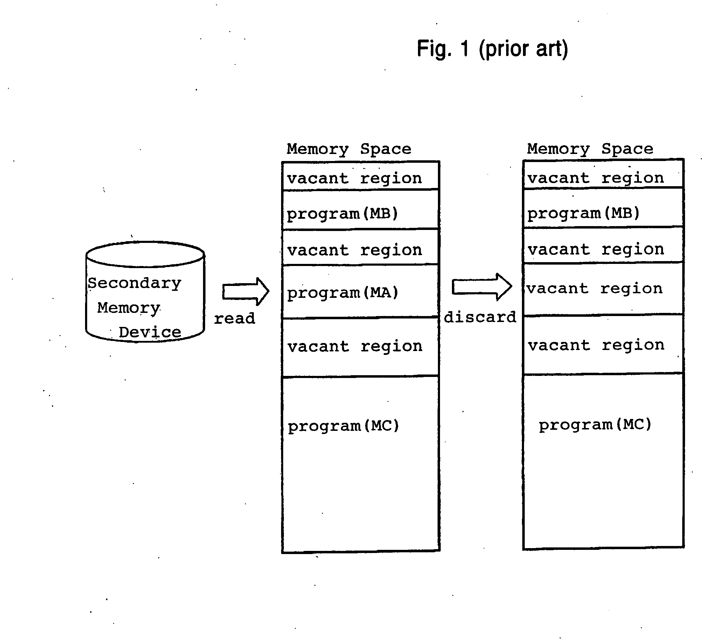

When a program is started up, the information processor first secures the memory space that the program will use (hereinbelow referred to as "processing space") as a first step. As a second step, the information processor next reads the program from a secondary memory device into memory. FIG. 1 shows an example in which a program is read from the secondary memory device to processing space MA that has been secured in the memory space.

The information processor further, as a third step, initializes a data region in the memory by means of an initialization process of the program. As a fourth step, the information processor starts execution of the program in memory. When the program is shut down, the information processor discards processing space MA and returns it to vacant region, as shown in FIG. 1.

The series of processes for starting up a program continues up to the start of execution of the program, and reducing the processes of the program therefore does not reduce the time spent in processing. However, regarding the second step, an improvement in response is typically obtained by using a cache to thus reduce access to the secondary memory device.

Alternatively, regarding the first step, a method has been proposed for reducing time by first saving tables that were used by a program when shutting down the program, and then using these tables when again starting up the program (refer to Japanese Patent Laid-Open Publication No. 2003-150394). The use of this method allows the omission of the process for assigning a memory region to a program when starting up the program and the process for releasing the memory region when shutting down the program, whereby response at the time of starting up or shutting down the program can be improved.

In the method of the prior art, however, the processing space of the program is held even after shutting down a program, and processing space is therefore secured for programs that are not actually being executed. As the number of programs that have been executed and then shut down increases, the processing space that is being held in the memory space also increases, and the possibility therefore arises that processing space cannot be secured when a new program is to be started up.
To avoid this problem, the processing space that is held must be discarded and returned to vacant region. However, discarding the processing space means that, if a program for which processing space has been discarded must again be started up, the processing space must again be secured and the time spent in start-up will be extended.

### Summary of the Invention:

It is an object of the present invention to provide an information processor that shortens the time spent for starting up programs, thus increasing convenience for the user.

To achieve the above-described object, the information processor of the present invention is an information processor that is capable of executing a plurality of programs and that includes a memory unit and a control unit.

When executing a program, the memory unit provides memory space that can be used as the processing space of the program.

The control unit retains the processing space of each of the programs that have been executed in the past in the memory space of the memory unit even after the programs have been shut down and manages the priority of the programs that have been executed in the past. When a program is to be started up, if the processing space of that program is retained in the memory space, the control unit recovers and uses that processing space. Alternatively, if the processing space of the program is not retained in the memory space, the control unit determines whether a vacant region that is sufficient for securing processing space of the program exists in the memory space, and if a sufficient vacant region exists, newly secures processing space of the program in that vacant region. If a sufficient vacant region does not exist, the control unit discards the processing space of the program having the lowest priority among programs that are not being executed to thus create a vacant region in the memory space, newly secures processing space of the program that is to be started up in that vacant region, and then reads the program that is to be started up to the newly secured processing space.

The above and other objects, features, and advantages of the present invention will become apparent from the following description with reference to the accompanying drawings, which illustrate examples of the present invention.

### Brief Description of the Drawings:

FIG. 1 shows the operations when an information processor of the prior art starts up and shuts down a program;
FIG. 2 is a block diagram showing the information processor of an embodiment of the present invention;
FIG. 3 is a block diagram showing the control unit shown in FIG. 2;
FIG. 4 is a flow chart showing the operations of the control unit shown in FIG. 2 at the time of starting up a program;
FIG. 5 is a schematic diagram of the processes when the control unit restores a program;
FIG. 6 shows an example of the content of the frequency-of-use management table;
FIG. 7 shows a schematic diagram of the processes when the control unit discards processing space in accordance with the frequency-of-use management table of FIG. 6 and thus creates a vacant region;
FIG. 8 shows a schematic diagram of the processes when the control unit reads a program from the secondary memory unit; and
FIG. 9 shows a schematic view of the processes when the control unit retains processing space.

### Detailed Description of the Preferred Embodiments:

Explanation next regards an embodiment of the present invention with reference to the accompanying figures of drawing.

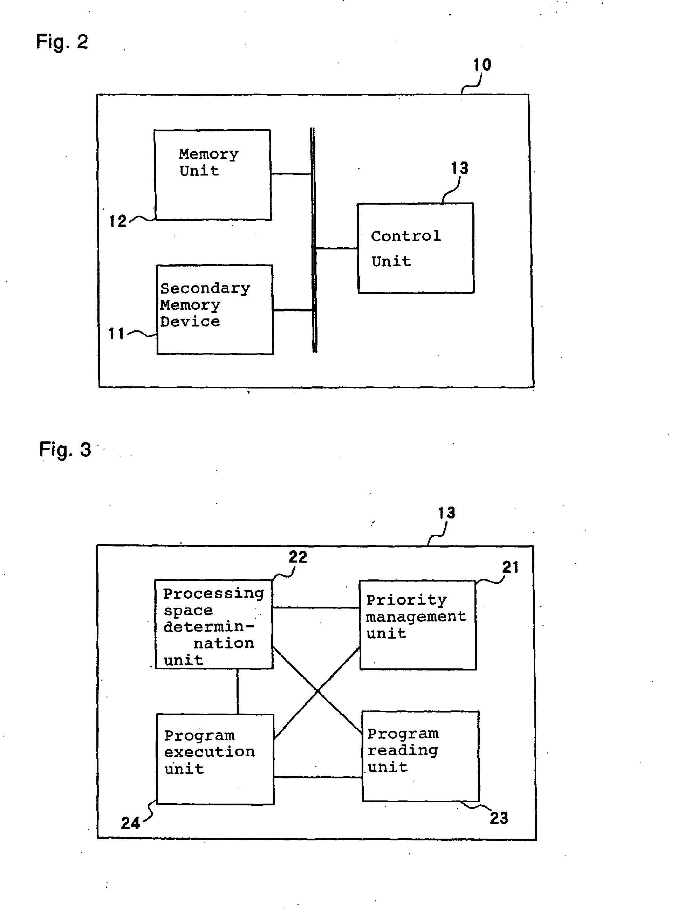

Referring to FIG. 2, information processor 10 of the present embodiment includes a secondary memory unit 11, memory unit 12, and control unit 13.

Secondary memory unit 11 stores various application programs in advance.

Memory unit 12 is controlled by control unit 13 and includes memory space that is used as processing space when a program is executed.

Control unit 13 starts up and executes or shuts down a program that is recorded in secondary memory unit 11 in accordance with, for example, the operation of a user or a request from another application. When starting up a program, control unit 13 secures processing space for that program, reads the program from secondary memory unit 11 to the processing space, and, after initializing the data region in the processing space, begins executing the program. When shutting down a program, control unit 13 maintains a state in which the processing space is held, whereby processes for securing the processing space and reading the program can be omitted when again starting up the program.

Holding the processing space is that the program region in the processing space remains unchanged with the program still recorded, and further, that the data region that was used by the program is secured. As for the data region, the region itself must be secured, although the content may or may not remain unchanged.

In addition, control unit 13 manages the frequency-of-use of each program that has been executed in the past as priority, and when starting up a new program, if a vacant region does not exist for securing the processing space of that program, control unit 13 discards the processing space of the program having the lowest frequency-of-use (priority) among programs that are not being executed, and thus creates a vacant region.

Referring to FIG. 3, control unit 13 includes: priority management unit 21, processing space determination unit 22, program-reading unit 23, and program execution unit 24.

Priority management unit 21 manages the frequency-of-use of each program.

Processing space determination unit 22 determines the processing space that is used by a program when the program is started up. The processing of processing space determination unit 22 differs depending on: whether a vacant region exists in the memory space of memory unit 12, and the frequency-of-use of each program that is managed by priority management unit 21.

When processing space determination unit 22 has secured a new processing space, program-reading unit 23 reads the program to this processing space.

Program execution unit 24, after having carried out an initialization process in the program in the processing space, executes the main processing of the program.

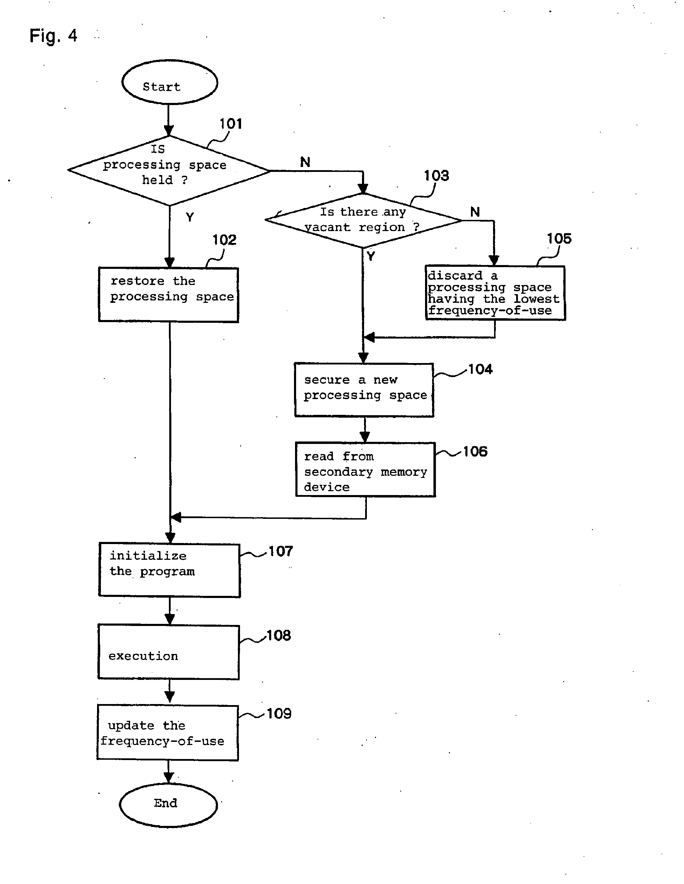

Referring to FIG. 4, when a program is started up, processing space determination unit 22 of control unit 13 first determines in Step 101 whether the processing space for this program is being held in the memory space of memory unit 12.

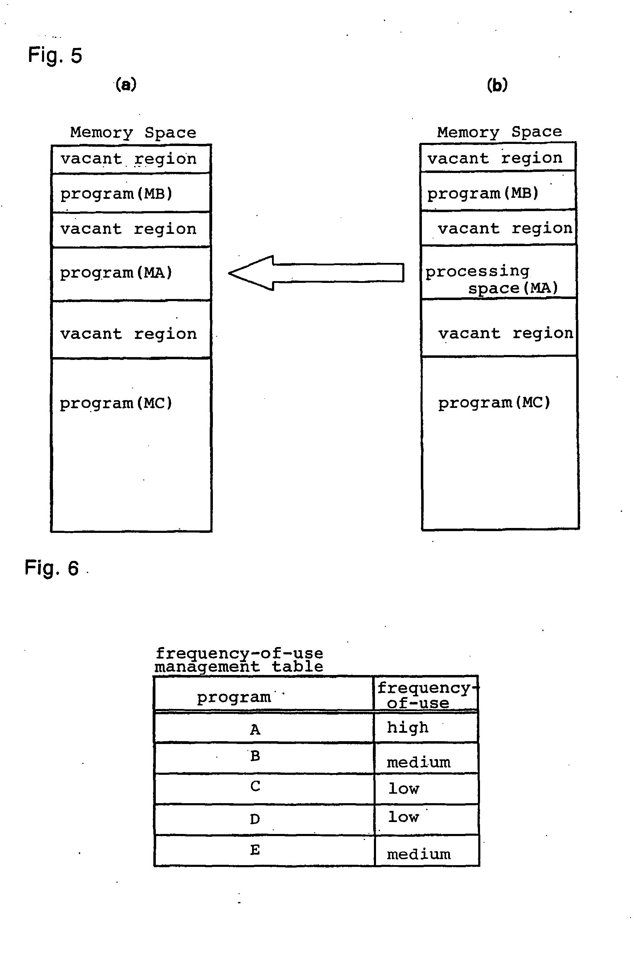

If processing space is being held, processing space determination unit 22 restores the processing space in Step 102. FIG. 5 is a schematic view of processing when control unit 13 brings about the restoration of the processing space. FIG. 5 shows an example of a case of restarting program A for which processing space is being retained. In FIG. 5, regions that are indicated as "program" show the processing space of programs that are being executed, and regions that are indicated as "processing space" show processing space that is being held for programs that have been shut down after having been executed. In addition, the processing space of program A is shown as "MA," the processing space of program B is shown as "MB," and the processing space of program C is shown as "MC." Referring to FIG. 5, processing space determination unit 22 secures the processing space of program A by restoring processing space (MA), which was being held in the memory space of memory unit 12 as shown in (b), to the state shown in (a).

On the other hand, if processing space is not being held, processing space determination unit 22 determines in Step 103 whether a vacant region exists in the memory space that would allow securing of the processing space of the program that is to be started.

If there is a vacant region, processing space determination unit 22 secures the processing space of the new program in the vacant region in Step 104. If, however, such a vacant region does not exist, processing space determination unit 22, using the information that is managed by priority management unit 21, creates a vacant region in Step 105 by discarding the processing space that is being held for the program having the lowest frequency-of-use among programs that are not being executed. Processing space determination unit 22 then secures the processing space for the new program in Step 104.

Priority management unit 21 uses a management table to manage the frequency-of-use of programs that have been executed. Referring to FIG. 6, the frequency-of-use of each of programs A-E is shown. In this case, the frequency-of-use is shown, for example, by the three levels of "High," "Medium," and "Low." The frequency-of-use of a program can be categorized by, for example, the number of start-ups within a prescribed time interval. In the present invention, any grading may be adopted for the frequency-of-use.

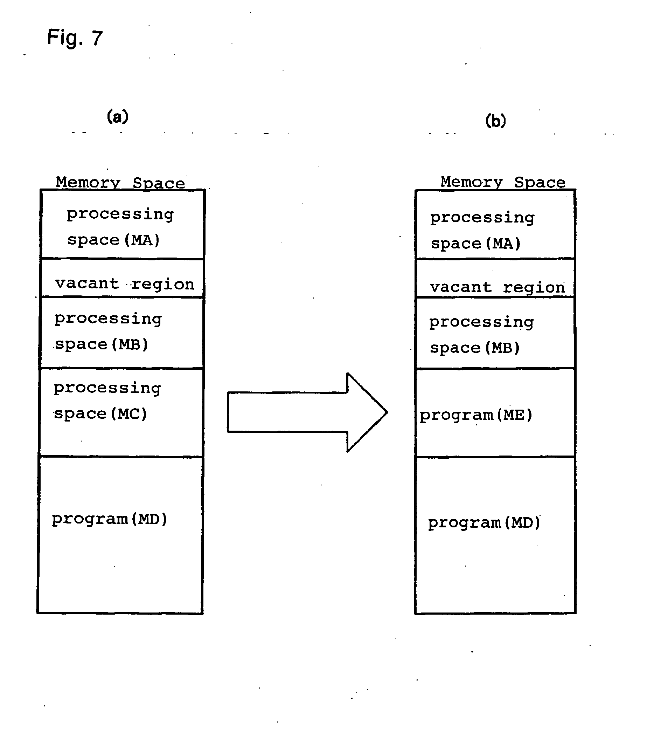

In FIG. 7, the meanings of the items displayed as "program," "processing space," and MA-MC are the same as in FIG. 5.

Here, as shown in FIG. 7(a), program D is being executed and processing spaces MA-MC are being held for programs A-C that are not being executed. When a request to start up program E is generated in this state, processing space determination unit 22 refers to the frequency-of-use management table of FIG. 6 and determines the program for which processing space is to be discarded. In FIG. 6, of programs A-C that are not currently being executed, the frequency-of-use of program C is the lowest, and processing space determination unit 22 therefore discards the processing space of program C to create a vacant region, and secures the processing space of program E in this vacant region. If sufficient processing space for program E cannot be secured by discarding only the processing space of program C, processing space determination unit 22 repeatedly discards the processing space in the order of lowest priority until the necessary vacant region can be secured.

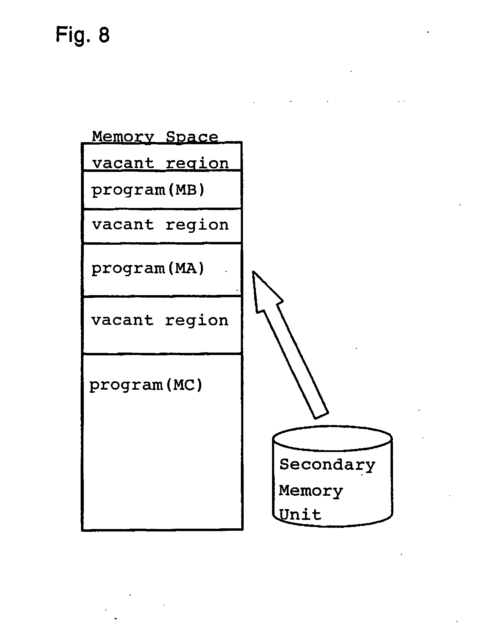

In the next Step 106, program-reading unit 23 reads the program from secondary memory unit 11 onto the processing space. FIG. 8 is a schematic view showing the processes when the control unit reads a program from the secondary memory unit. FIG. 8 shows a case of starting up program A for which processing space is not retained. In FIG. 8, the meanings of items displayed as "program," "processing space," and MA-MC are the same as in FIG. 5. Referring to FIG. 8, program-reading unit 23 of control unit 13 reads a program from secondary memory unit 11 to the memory space of memory unit 12.

Following the process of Step 102 or Step 106, program execution unit 24 of control unit 13 carries out the process of initializing the program and initializes the data region in Step 107. Next, in Step 108, program execution unit 24 begins execution of the program. Program execution unit 24 then updates the frequency-of-use of the program in Step 109.

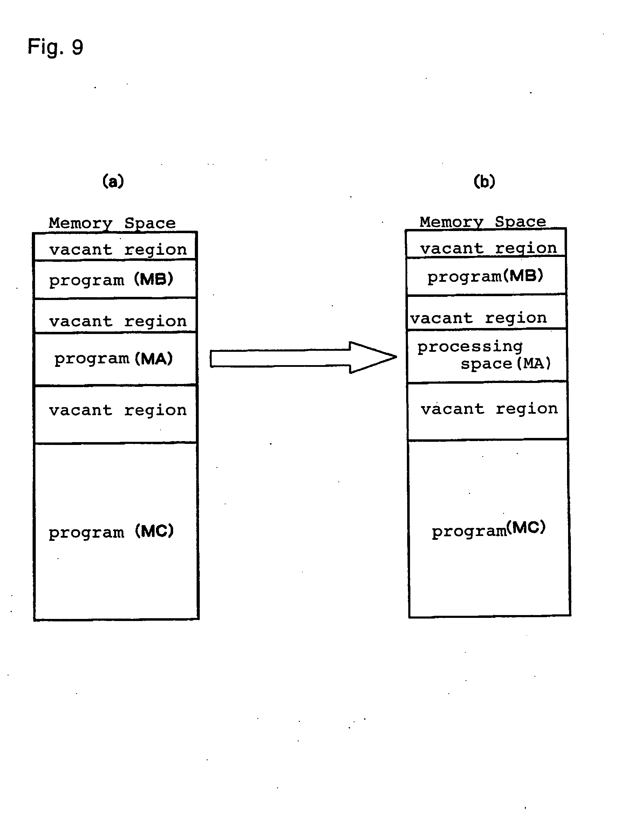

When shutting down a program, processing space determination unit 22 of control unit 13 does not discard but continues to retain the processing space despite the termination of execution of the program. FIG. 9 gives a schematic view of the processing when the control unit retains the processing space. FIG. 9 shows a case in which program A is shut down. In FIG. 9, the display of "program," "processing space," and MA-MC have the same meanings as shown in FIG. 5. Referring to FIG. 9, when program A, which was being executed as shown in (a), is shut down, control unit 13 retains processing space MA of the memory space of memory unit 12 as shown in (b).

Thus, according to the information processor of the present embodiment, if a program for which processing space is not being retained in the memory space of memory unit 12 is to be started up and a sufficient vacant region does not exist in the memory space, processing space determination unit 22 of control unit 13 uses the frequency-of-use that is obtained by priority management unit 21 to discard processing space beginning from programs having a low frequency-of-use while leaving the processing space of programs having a high frequency-of-use. As a result, when a program having a high frequency-of-use is started up again, the processes in which processing space determination unit 22 secures the processing space and program-reading unit 23 reads the program to the processing space are omitted, whereby the start-up time is reliably reduced and the level of convenience for the user is raised.

Although control unit 13 uses the frequency-of-use of programs as the priority that serves as a standard when determining the processing space that is to be discarded in the present embodiment, the present invention is not-limited to this form. For example, control unit 13 may determine programs that have a high likelihood of start-up based on past patterns in the order of start-up of programs and then set the priority of these programs to a high level. A certain level of regularity may be seen in the order of program start-up due to the relevance between programs, the purpose of use of each program, and the habits of the user, and this regularity may be derived from past patterns of use.

The processing space of programs that have a high likelihood of being started up is thus retained in the memory space, whereby the potential for shortening the start-up time can be increased.

While preferred embodiments of the present invention have been described using specific terms, such descript ion is for illustrative purposes only, and it is to be understood that changes and variations may be made without departing from the spirit or scope of the following claims.

## Claims

1. An information processor that is capable of executing a plurality of programs, said information processor comprising:
a memory unit for providing memory space that, when executing said programs, can be used as the processing space of said programs; and
a control unit for:
retaining each processing space of programs that have been executed in the past in said memory space of said memory unit even after the programs have been terminated,
managing priority of programs that have been executed in the past; and
when any program is to be started up:
if processing space of that program is retained in said memory space, recovering and using that processing space;
if processing space of that program is not retained in said memory space, determining whether a vacant region that is sufficient for securing processing space of that program exists in said memory space, and
if a sufficient vacant region exists, newly securing processing space of that program in the vacant region; and
if a sufficient vacant region does not exist:
discarding the processing space of the program having the lowest said priority among programs that are not being executed to thus create a vacant region in said memory space;
newly securing processing space of said program that is to be started up in that vacant region, and
finally, reading said program that is to be started up to said processing space that has been newly secured.

2. An information processor according to claim 1, wherein said control unit increases said priority of a program having a high frequency-of-use based on the number of times of start-up in the past.

3. An information processor according to claim 1, wherein said control unit increases said priority of a program that is highly likely to be started up next based on the order of start-up in the past.

4. A memory control device in an information processor that is capable of executing a plurality of programs for managing memory space, said memory control unit managing memory space that is used as processing space of said programs; said memory control device comprising:
a priority management unit for managing priority of each of programs that have been executed in the past;
a processing space determination unit for:
retaining in said memory space each processing space of said programs that have been executed in the past even after the programs have been shut down; and
when any program is to be started up:
if processing space of that program is retained in said memory space, recovering and using that processing space;
if processing space of that program is not retained in said memory space: determining whether a vacant region that is sufficient for securing processing space of that program exists in said memory space,
if a sufficient vacant region exists, newly securing processing space of that program in the vacant region; and
if a sufficient vacant region does not exist: discarding the processing space of the program having the lowest said priority among programs that are not being executed to thus create a vacant region in said memory space; and
newly securing processing space of said program that is to be started up in that vacant region, and
a program-reading unit for reading said program that is to be started up to said processing space that said processing space determination unit has newly secured.

5. A memory control device according to claim 4, wherein said priority management unit increases said priority of a program having a high frequency-of-use based on the number of times of start-up in the past.

6. A memory control device according to claim 4, wherein said priority management unit increases said priority of a program that is highly likely to be started up next based on the order of start-up in the past.

7. A memory control program in an information processor that is capable of executing a plurality of programs, said memory control program being executed by said information processor for managing memory space that is used as processing space by said programs, and said memory control program causing said information processor to function as:
a priority management unit for managing priority of each of programs that have been executed in the past;
a processing space determination unit for:
retaining in said memory space the processing space of each of said programs that have been executed in the past even after the programs have been shut down; and
when any program is to be started up:
if processing space of that program is retained in said memory space, recovering and using that processing space;
if processing space of that program is not retained in said memory space: determining whether a vacant region that is sufficient for securing processing space of that program exists in said memory space,
if a sufficient vacant region exists, newly securing processing space of that program in the vacant region; and
If a sufficient vacant region does not exist: discarding the processing space of the program having the lowest said priority among programs that are not being executed to thus create a vacant region in said memory space; and
newly securing processing space of said program that is to be started up in that vacant region, and
a program-reading unit for reading said program that is to be started up to said processing space that said processing space determination unit has newly secured.

8. A memory control program according to claim 7, wherein said priority management unit increases said priority of a program having a high frequency-of-use based on the number of times of start-up in the past.

9. A memory control program according to claim 7, wherein said priority management unit increases said priority of a program that is highly likely to be started up next based on the order of start-up in the past.
